# EUROPEAN PATENT SPECIFICATION

(11) **EP 4 436 825 B1**
(45) Date of publication and mention of the grant of the patent: **31.12.2025**
(21) Application number: 22783070.0
(22) Date of filing: 22.09.2022
(51) Int. Cl.: B60L 53/18, B65H 54/28

(54) **CABLE HANDLING SYSTEM**
KABELTRANSPORTSYSTEM
SYSTÈME DE MANUTENTION DES CÂBLES

(30) Priority: 22.11.2021 SE 2151417
(43) Date of publication of application: 02.10.2024
(73) Proprietor: Epiroc Rock Drills Aktiebolag, 701 91 Örebro (SE)
(72) Inventor: HOLMSTRÖM, Peter, 719 93 Vintrosa (SE); IVANSSON, Charlotta, 702 85 Örebro (SE); ALBREKTSSON, Jörgen, 703 75 Örebro (SE); DAHL, Robert, 702 30 Örebro (SE)
(74) Representative: Epiroc Rock Drills AB
(86) International application number: PCT/SE2022/050840
(87) International publication number: WO 2023/091058

(56) References cited:
- EP-A2- 0 587 544
- GB-A- 2 592 031
- KR-A- 20130 049 902
- US-A- 3 943 306
- US-A- 4 511 100

## Description

### Field of the Invention

The present invention relates to the field of cable handling systems at electrically powered mining or construction vehicles, and more specifically to a cable handling system at such a vehicle which is supplied electric power through a trailing electrical cable which is arranged to be wound onto and unwound from a cable reel on the vehicle body.

### Background of the Invention

Fleets of mining and construction machines are usually operated simultaneously in a working area to execute a shared work assignment, the performance of which shared work assignment requires the performance of individual work tasks at individual locations by individual machines in the fleet.

The performance of the individual work tasks requires application of an appropriate machine for the specific task, such as a drill rig for performing drilling operations. Such a drill rig will require a certain amount of energy for performing its individual work task and for propelling it to and from its individual work location.

The energy for performing work and for propulsion is commonly provided by internal combustion engines or electrical motors. In order to be able to operate a drilling rig with electricity, electrical energy may be supplied to the rig using a cable. Such a drilling rig may be found in EP0587544A2.

One difficulty, when supplying a drilling rig with electrical energy via a cable, is that the cable makes it difficult to move the drilling rig as the rig must always be connected to the electrical grid and the cable, for practical reasons, has a limited length limiting furthest travel. Furthermore, the cables used are often thick and rigid making them awkward to avoid when performing complex maneuvering with the drilling rig or when repeatedly reversing shorter distances whilst adjusting the position thereof. It is generally difficult to move the drilling rig and avoid running over the cable, which can be severely damaged or severed by running over it.

### Summary of the Invention

An objective of the present disclosure is to provide a cable handling system at an electrically powered mining or construction vehicle that includes a skid-steered tracked or wheeled vehicle body which is powered for motion, directly or indirectly, by an electric motor carried on the body and which is supplied electric power either by an on-board battery and/or fuel cell or through a trailing electrical cable which is arranged to be wound onto and unwound from a cable reel on the vehicle body during vehicle motion, the electrical cable provided for a connection to a remote source of electrical power. This objective is achieved in a first aspect by a system that comprises: a cable guide assembly that includes an arm member and a cable guide mechanism, wherein: a first end of the arm member is rotatably attached at a rear of the vehicle body to be moveable horizontally up to about 90 degrees in either direction around the rear of the vehicle body through an arc centered in the direction of a longitudinal axis of the vehicle body; the cable guide mechanism is arranged at a second distal end of the arm member to receive and guide a cable used towards the cable reel and wherein the cable guide assembly further comprises a locking arrangement for selectively locking the arm member at one or more positions along the arc.

The herein proposed system ensures that it is possible to move the vehicle without running over the cable when performing complex maneuvering with the vehicle or when repeatedly reversing shorter distances whilst adjusting the position of the vehicle. It enables to maneuver the vehicle in difficult terrain on a site, as well as, in the case of a drilling rig, maneuver a carrier thereof and the cable separately. The drilling rig is enabled to rotate / swing the carrier in place, while keeping the cable still. As it is often required to turn a drilling rig towards the place where drilling is desired, for example, the herein proposed system provide an advantage if there are precipices around the drilling rig, and there is a need to drill several locations close to each other, it enables spinning the carrier on the spot while the cable can remain still. Another advantage is that, with an appropriate length arm, a vehicle operator will be enabled to maneuver a drilling rig relatively freely, e.g such as reversing or turning without risking running over the cable. Another advantage of having a cable reel on a drilling rig is that it is not necessary to have that function on site, but there needs only to be an "electrical outlet" available on site. It is also easier to control a cable reel that is arranged on a vehicle to provide automation, e.g. such that when the vehicle is reversed the cable reel automatically winds up the cable.

In one embodiment, the arm member is freely moveable through the arc during vehicle movement.

In one embodiment, the arrangement for selectively locking the arm member comprises a locking pin and a corresponding holed locking plate.

In one embodiment, the locking pin is provided with a weak link configured to, when the locking pin is used for locking the arm member, break when subjected to a predetermined force and release the arm member to become freely moveable through the arc.

In one embodiment, the cable guide mechanism comprises a plurality of rollers for guiding a cable used towards the cable reel.

In one embodiment, the plurality of rollers are arranged to guide a cable used whilst ensuring that an allowable cable curve-radius for such a cable used is maintained for all arm member positions along the arc.

In one embodiment, the length of the arm member, from its attachment centrally at the rear of the vehicle body to the cable guide mechanism at its second distal end, is such that a cable used will become positioned at a predetermined distance from the vehicle body, the tracks or wheels of the vehicle, or other parts of the vehicle.

In one embodiment, the arm member is connected to an actuator arrangement to be controllably moveable through the arc during vehicle movement.

In one embodiment, the actuator arrangement comprises one or more hydraulic-, pneumatic-, or electric actuators.

### Brief Description of the Drawings

With reference to the appended drawings, below follows a more detailed description of example embodiments of the invention, wherein:
Fig. 1 shows a schematic view of electrically powered drill rig with a cable guide assembly;
Fig. 2 shows a schematic top view of the drill rig of figure 1;
Fig. 3 shows a schematic top view of the drill rig of figure 1 with an arm member of the cable guide assembly guiding an electric cable to the right of the vehicle;
Fig. 4 shows a schematic top view of the drill rig of figure 1 with an arm member of the cable guide assembly guiding an electric cable to the left of the vehicle;
Fig. 5 shows a schematic view of a locking arrangement for selectively locking the arm member at one or more positions;
Fig. 6 shows a schematic view of an actuator arrangement to assist in positioning the arm member;
Fig. 7 shows a schematic view of the drill rig of figure 1 with a carrier attached.

### Detailed Description of Example Embodiments

In the following, a detailed description of a cable handling system 1 at an electrically powered mining or construction vehicle 2, herein illustrated by a drill rig, is provided. Drilling rigs are used for several purposes, exploration drilling which aims to identify the location and quality of a mineral, and production drilling, used in the production-cycle for mining and/or construction.

In the drawing figures, like reference numerals designate identical or corresponding elements throughout the several figures. It will be appreciated that these figures are for illustration only and do not in any way restrict the scope of the present disclosure.

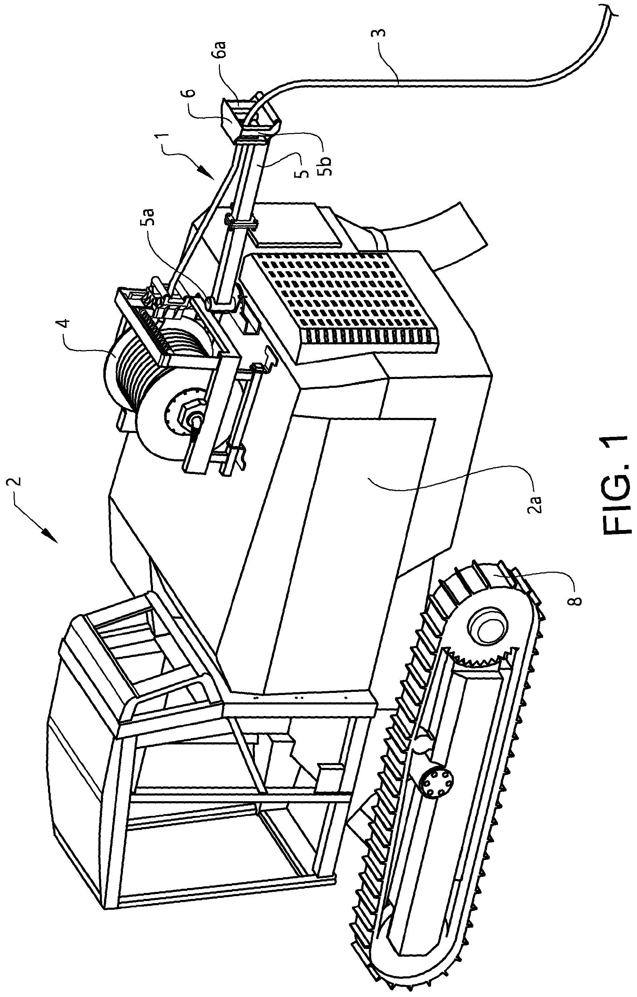

With reference to Fig. 1, the electrically powered mining or construction vehicle 2 includes a skid-steered tracked or wheeled 8 vehicle body 2a, in Fig. 1 shown as tracked 8. Wheeled or tracked vehicles where the wheels are mechanically locked in synchronization on each side, and where the left-side drive wheels can be driven independently of the right-side drive wheels are called skid-steered. Turning of such a vehicle is accomplished by differential steering, in which the left and right wheel or track pairs are operated at different speeds, and the machine turns by skidding or dragging its wheels or tracks across the ground. Through skid-steering the vehicle 2 is enabled to basically rotate on the spot.

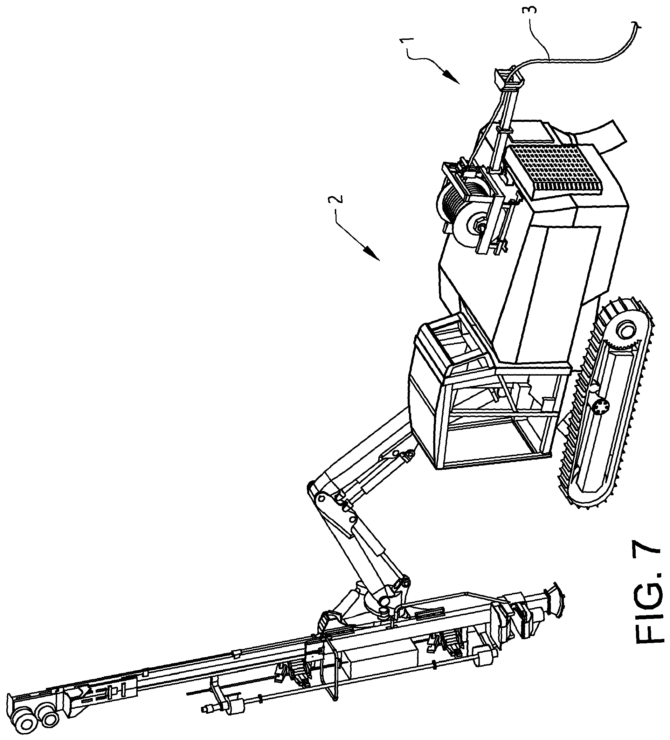

Fig. 7 shows a schematic view of the complete drill rig of figure 1 with a carrier attached, which carrier is omitted from Fig. 1 for increased exposure of relevant features of the present disclosure.

The vehicle 2 is powered for motion, directly or indirectly, by an electric motor (not shown) carried on the vehicle body 2a. By directly is here meant that the electric motor operates the wheels or tracks directly via a mechanical transmission and by indirectly that the electric motor e.g., operates an hydraulic pump for pressurizing hydraulic fluid, which in turn is used to operate the tracks or wheels via one or more hydraulic motors.

The electric motor is supplied electric power either by an on-board battery and/or fuel cell (not shown) or through a trailing electrical cable 3. The trailing electric cable 3 is arranged to be wound onto and unwound from a cable reel 4 on the vehicle body 2a during vehicle 2 motion. The cable reel 4 is suitably provided with some automation, such that when the vehicle 2 is reversed the cable reel 4 automatically winds up the electrical cable 3 as tension in the electrical cable 3 is reduced and conversely, when the vehicle moves forward the electrical cable 3 is unwound from the cable reel 4 as tension in the electrical cable 3 is increased. A vehicle operator may also be enabled to manually unwind and wind up the cable using a suitable man-machine-interface (MMI).

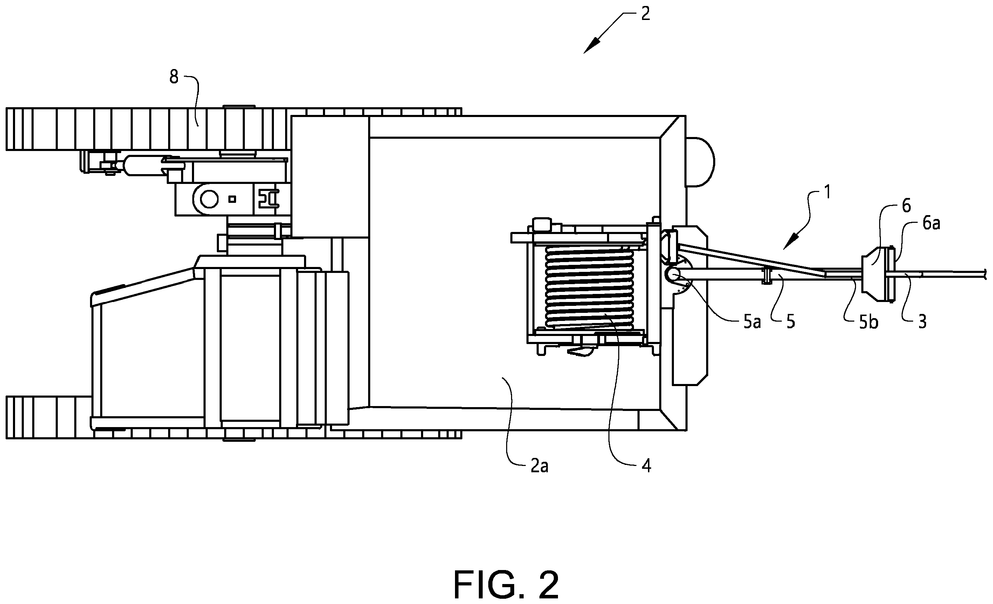

When unwinding the trailing electrical cable 3, e.g. as illustrated in Fig. 2, it should preferably be possible to "drag" out the cable 3, i.e. the torque on the cable reel 4 should be low when tramming forward enabling the cable 3 to roll out by itself without exerting so much tension that the cable is caused to move around on the ground.

The cable reel 4 should either be large enough for the cable 3 to be rolled up in a random pattern or provided with a mechanism (not shown) for positioning the cable 3 in an orderly pattern on the cable reel 4 as the cable 3 is wound up.

The electrical cable 3 is provided for a connection to a remote source of electrical power (not shown). An advantage of having the cable reel 4 on the vehicle body 2a, as described above, is that the electrically powered mining or construction vehicle 2 may be operated fully electric for extended periods of time when in reach of a suitable electric outlet. Thus, it is possible to connect the vehicle 2 to the electric grid when the vehicle 2 is to be used for longer time periods when there is not sufficient energy in the battery and/or fuel cell.

An electrical cable 3 suitable for the above purpose will usually be quite thick, heavy and stiff and may be designed for a nominal voltage of 1000V or other voltages, e.g. in the span 400-5000V and above, which voltages may be provides as Alternating Current (AC) or as Direct Current (DC) feeds. Although the electrical cable 3 is described herein as one electrical cable it is also possible to use two or more electrical cables.

The expression "mining or construction vehicle" as used in the present disclosure may include drilling rigs for production, exploration and construction.

As illustrated in Fig. 1, the cable handling system 1 comprises a cable guide assembly 5, 6 that includes an arm member 5 and a cable guide mechanism 6.

A first end 5a of the arm member 5 is rotatably attached at a rear of the vehicle body 2a such that it is moveable horizontally up to about 90 degrees in either direction around the rear of the vehicle body 2a through an arc centered in the direction of a longitudinal axis of the vehicle body 2a. The arm member 5 is suitably given a high position at the rear of the vehicle body 2a.

The cable guide mechanism 6 is arranged at a second distal end 5b of the arm member 5 to receive and guide a cable 3 used towards the cable reel 4.

The arm member 5 is suitable arranged freely moveable through the arc during vehicle 2 movement.

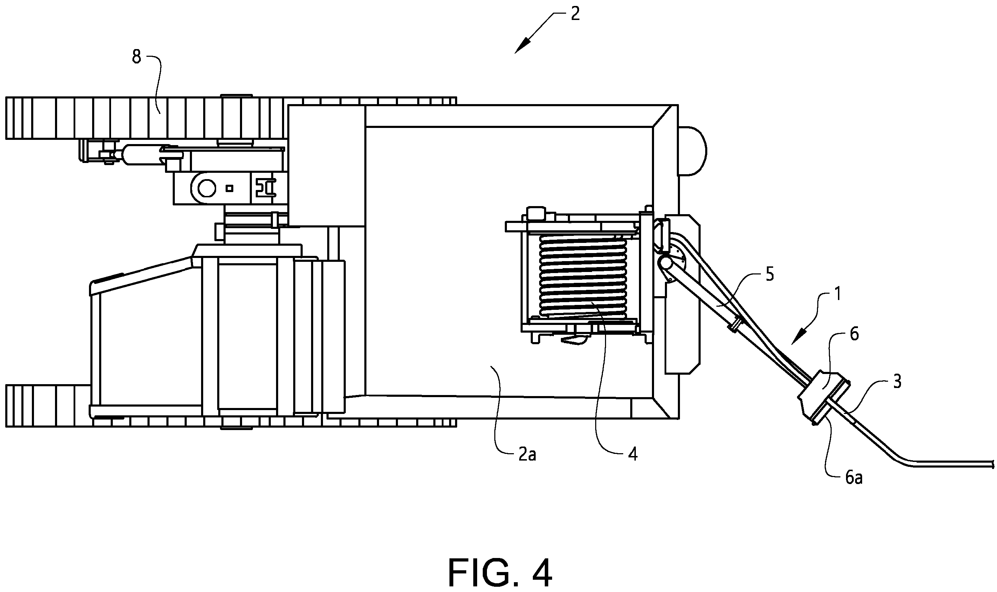

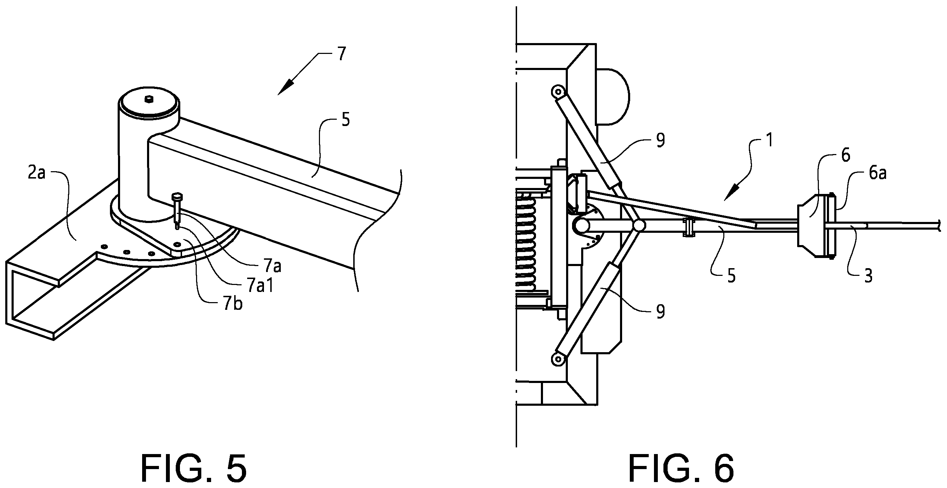

However, the cable guide assembly comprises a locking arrangement 7, as illustrated in Fig. 5, for selectively locking the arm member 5 at one or more positions along the arc. For most use cases it should suffice if the locking arrangement 7 provides for locking the arm member 5 in at least three positions along the arc. One of these positions should suitably, when an operator cabin is placed on the vehicle's left-hand side, be a position wherein the cable 3 is placed outside the vehicle's left-hand side, as illustrated in Fig. 4, in order to ensure good visibility to the operator using a rearview mirror or to a reverse viewing camera.

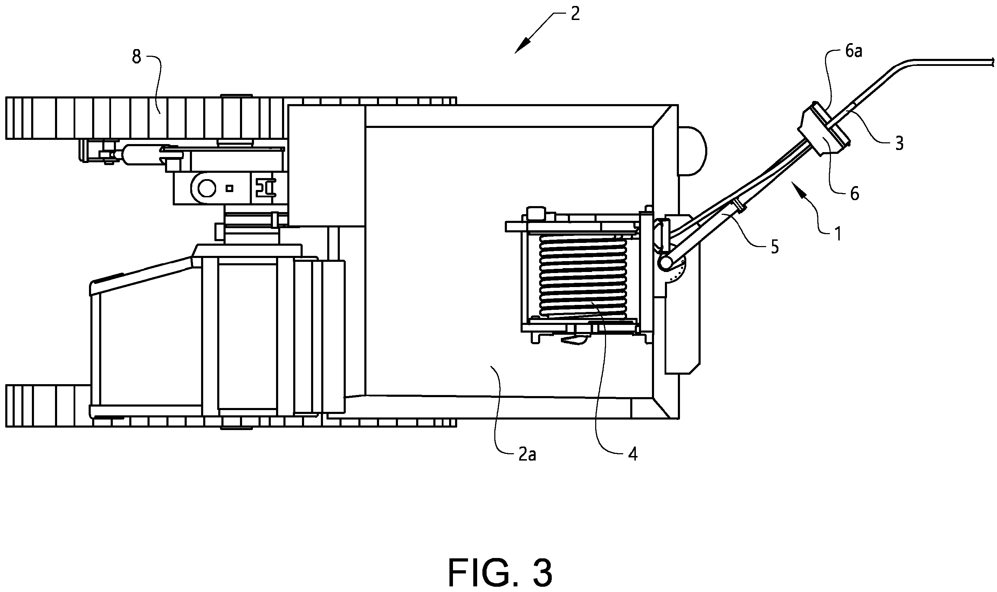

Conversely, one of these positions may also be a position wherein the cable 3 is placed outside the vehicle's right-hand side, as illustrated in Fig. 3, especially if an operator cabin is placed on the vehicle's right-hand side.

Yet another position may be a transport mode position, where the arm member 5 is positioned suitably for keeping the limits of the dimensions of an associated transport vehicle or simply keeping the arm member 5 secured and out of harm's way when operating the vehicle under battery and/or fuel cell power.

As further illustrated in Fig. 5 the locking arrangement 7 for selectively locking the arm member 5 may comprise a locking pin 7a and a corresponding holed locking plate 7b. The locking pin 7a may be provided with a weak link 7a1 configured to, when the locking pin 7a is used for locking the arm member 5, break when subjected to a predetermined force and release the arm member 5 to become freely moveable through the arc. Thus, damaging or breaking the arm member 5 may be prevented should the arm member 5 get stuck with surrounding objects. Although the example locking arrangement 7 in Fig. 5 is shown as comprising a locking pin 7a and a corresponding holed locking plate 7b, other locking mechanisms may also be employed, e.g. chains connecting to the arm member 5 from opposite sides, thus keeping the arm member 5 positioned and enabling locking the position of the arm member 5.

The cable guide mechanism 6 may comprise a plurality of rollers 6a for guiding a cable 3 used towards the cable reel 4 or alternatively only one roller 6a may be employed.

The plurality of rollers 6a are arranged to guide a cable 3 used whilst ensuring that an allowable cable curve-radius for such a cable 3 used is maintained for all arm member 5 positions along the arc. Furthermore, the friction force of the cable 3 guiding rollers should be kept as low as possible. In order to achieve those objectives, the diameters of the rollers 6a of the cable guide mechanism 6 should be quite large to help minimize friction and to avoid sharp bends on the cable and allowing the cable 3 to roll up evenly on the cable reel 4.

The length of the arm member 5, from its attachment at the rear of the vehicle body 2a, i.e. from its first end 5a, to the cable guide mechanism 6 at its second distal end 5b, should be such that a cable 3 used will become positioned at a predetermined distance from the vehicle body 2a, the tracks or wheels 8 of the vehicle2, or other parts of the vehicle 2. In this way the length of the arm member 5 allows an operator to maneuver the vehicle 2 relatively freely such as reversing or turning without risking running over the cable 3.

The arm member 5 may, as illustrated in Fig. 6, be connected to an actuator arrangement 9 to be controllably moveable through the arc during vehicle 2 movement. A vehicle operator will thus be enabled to manually position the arm member 5 along the arc using a suitable man-machine-interface (MMI). The actuator arrangement 9 may comprise one or more hydraulic-, pneumatic-, or electric actuators 9.

Although the invention has been illustrated and described in detail in the drawings and foregoing description, such illustration and description are to be considered illustrative or exemplary and the invention is not limited to the disclosed embodiments. For example, in alternative embodiments, a hose reel (not shown) may be arranged on the vehicle 2 and use the same guide arm member 5 as the cable reel 4, but with an own set of guide rolls provided at the cable guide mechanism 6. Thus, a hose and such a hose reel may be used to supply the vehicle 2 with liquid or gas, e.g. in case of a drill rig supply this drill rig with liquid or gas for a drilling operation. It is likewise possible to use the herein disclosed arm member 5 and guide mechanism 6 with only a hose reel and no cable reel 4 arranged on the vehicle 2

The scope of the invention is defined by the appended claims.

## Claims

1. A cable handling system (1) at an electrically powered mining or construction vehicle (2) that includes a skid-steered tracked or wheeled (8) vehicle body (2a) which is powered for motion, directly or indirectly, by an electric motor carried on the vehicle body (2a) and which is supplied electric power either through a trailing electrical cable (3) or an on-board battery and/or fuel cell, which trailing electrical cable (3) is arranged to be wound onto and unwound from a cable reel (4) on the vehicle body (2a) during vehicle (2) motion, the electrical cable (3) provided for a connection to a remote source of electrical power, the system (1) comprising:
a cable guide assembly (5, 6) that includes an arm member (5) and a cable guide mechanism (6),
wherein:
a first end (5a) of the arm member (5) is rotatably attached at a rear of the vehicle body (2a),
**characterized in that**
the first end of the arm member is moveable horizontally up to about 90 degrees in either direction around the rear of the vehicle body (2a) through an arc centered in the direction of a longitudinal axis of the vehicle body (2a);
the cable guide mechanism (6) is arranged at a second distal end (5b) of the arm member (5) to receive and guide the electrical cable (3) used towards the cable reel (4),
wherein the cable guide assembly further comprises a locking arrangement (7) for selectively locking the arm member (5) at one or more positions along the arc.

2. The system (1) according to claim 1, wherein the arm member (5) is freely moveable through the arc during vehicle (2) movement.

3. The system (1) according to claim 1 wherein the locking arrangement (7) for selectively locking the arm member (5) comprises a locking pin (7a) and a corresponding holed locking plate (7b).

4. The system (1) according to claim 3, wherein the locking pin (7a) is provided with a weak link (7a1) configured to, when the locking pin (7a) is used for locking the arm member (5), break when subjected to a predetermined force and release the arm member (5) to become freely moveable through the arc.

5. The system (1) according to claim 1, wherein the cable guide mechanism (6) comprises a plurality of rollers (6a) for guiding a cable (3) used towards the cable reel (4).

6. The system (1) according to claim 5, wherein the plurality of rollers (6a) are arranged to guide a cable (3) used whilst ensuring that an allowable cable curve-radius for such a cable (3) used is maintained for all arm member (5) positions along the arc.

7. The system (1) according to claim 1, wherein the length of the arm member (5), from its attachment at the rear of the vehicle body (2a) to the cable guide mechanism (6) at its second distal end (5b), is such that a cable (3) used will become positioned at a predetermined distance from the vehicle body (2a), the tracks or wheels (8) of the vehicle(2), or other parts of the vehicle (2).

8. The system (1) according to claim 1, wherein the arm member (5) is connected to an actuator arrangement (9) to be controllably moveable through the arc during vehicle (2) movement.

9. The system (1) according to claim 8, wherein the actuator arrangement (9) comprises one or more hydraulic-, pneumatic-, or electric actuators (9).

## Patentansprüche

1. Kabeltransportsystem (1) an einem elektrisch angetriebenen Bergbau- oder Baufahrzeug (2), das einen kufengesteuerten, raupen- oder radgetriebenen (8) Fahrzeugkörper (2a) einschließt, der direkt oder indirekt durch einen Elektromotor, der auf dem Fahrzeugkörper (2a) getragen wird, zur Bewegung angetrieben wird und der entweder durch ein elektrisches Schleppkabel (3) oder eine Bordbatterie und/oder eine Brennstoffzelle mit elektrischer Energie versorgt wird, wobei das elektrische Schleppkabel (3) so konfiguriert ist, dass es während der Bewegung des Fahrzeugs (2) auf eine Kabeltrommel (4) an dem Fahrzeugkörper (2a) aufgewickelt und von dieser abgewickelt werden kann, wobei das elektrische Kabel (3) für eine Verbindung mit einer entfernten Quelle elektrischer Energie vorgesehen ist, wobei das System (1) Folgendes umfasst:
eine Kabelführungsanordnung (5, 6), die ein Armelement (5) und einen Kabelführungsmechanismus (6) einschließt,
wobei:
ein erstes Ende (5a) des Armelements (5) drehbar an einem hinteren Teil des Fahrzeugkörpers (2a) befestigt ist,
**dadurch gekennzeichnet, dass**
das erste Ende des Armelements horizontal bis zu etwa 90 Grad in jede Richtung um den hinteren Teil des Fahrzeugkörpers (2a) durch einen in Richtung einer Längsachse des Fahrzeugkörpers (2a) zentrierten Bogen beweglich ist;
der Kabelführungsmechanismus (6) an einem zweiten distalen Ende (5b) des Armelements (5) angeordnet ist, um das verwendete elektrische Kabel (3) aufzunehmen und zur Kabeltrommel (4) zu führen,
wobei die Kabelführungsanordnung weiter eine Verriegelungsanordnung (7) zum selektiven Verriegeln des Armelements (5) an einer oder mehreren Positionen entlang des Bogens umfasst.

2. System (1) nach Anspruch 1, wobei das Armelement (5) während der Bewegung des Fahrzeugs (2) frei durch den Bogen bewegbar ist.

3. System (1) nach Anspruch 1, wobei die Verriegelungsanordnung (7) zum selektiven Verriegeln des Armelements (5) einen Verriegelungsstift (7a) und eine entsprechende gelochte Verriegelungsplatte (7b) umfasst.

4. System (1) nach Anspruch 3, wobei
der Verriegelungsstift (7a) mit einem schwachen Bindeglied (7a1) bereitgestellt wird, das so konfiguriert ist, dass es, wenn der Verriegelungsstift (7a) zum Verriegeln des Armelements (5) verwendet wird, bricht, wenn es einer vorbestimmten Kraft ausgesetzt wird, und das Armelement (5) freigibt, sodass es sich frei durch den Bogen bewegen kann.

5. System (1) nach Anspruch 1, wobei der Kabelführungsmechanismus (6) eine Vielzahl von Rollen (6a) zum Führen eines verwendeten Kabels (3) zur Kabeltrommel (4) umfasst.

6. System (1) nach Anspruch 5,
wobei die Vielzahl von Rollen (6a) angeordnet ist, um ein verwendetes Kabel (3) zu führen, während sie sicherstellt, dass ein zulässiger Kabelkurvenradius für ein solches verwendetes Kabel (3) für alle Positionen des Armelements (5) entlang des Bogens beibehalten wird.

7. System (1) nach Anspruch 1, wobei die Länge des Armelements (5) von seiner Befestigung am hinteren Teil des Fahrzeugkörpers (2a) bis zum Kabelführungsmechanismus (6) an seinem zweiten distalen Ende (5b) so ausgebildet ist, dass ein verwendetes Kabel (3) in einem vorbestimmten Abstand vom Fahrzeugkörper (2a), den Ketten oder Rädern (8) des Fahrzeugs (2) oder anderen Teilen des Fahrzeugs (2) positioniert wird.

8. System (1) nach Anspruch 1, wobei das Armelement (5) mit einer Aktuatoranordnung (9) verbunden ist, um während der Bewegung des Fahrzeugs (2) steuerbar durch den Bogen bewegbar zu sein.

9. System (1) nach Anspruch 8,
wobei die Aktuatoranordnung (9) einen oder mehrere hydraulische, pneumatische oder elektrische Aktuatoren (9) umfasst.

## Revendications

1. Système (1) de manutention des câbles au niveau d'un véhicule (2) minier ou de construction à propulsion électrique qui inclut une carrosserie (2a) de véhicule à chenilles ou à roues (8) dirigée par patins, qui est alimenté pour son mouvement, directement ou indirectement, par un moteur électrique porté sur la carrosserie (2a) de véhicule et qui est alimenté en énergie électrique soit par un câble (3) électrique arrière soit par une batterie embarquée et/ou une pile à combustible, lequel câble (3) électrique arrière est agencé pour être enroulé sur une bobine (4) de câble sur la carrosserie (2a) de véhicule pendant le mouvement du véhicule (2), et déroulé de celle-ci, le câble (3) électrique étant prévu pour être relié à une source à distance d'alimentation électrique, le système (1) comprenant :
un ensemble (5, 6) de guidage de câble qui inclut un élément (5) de bras et un mécanisme (6) de guidage de câble,
dans lequel :
une première extrémité (5a) de l'élément (5) de bras est fixée en rotation au niveau de l'arrière de la carrosserie (2a) de véhicule,
**caractérisé en ce que**
la première extrémité de l'élément de bras est mobile horizontalement jusqu'à environ 90 degrés dans l'une ou l'autre direction autour de l'arrière de la carrosserie (2a) de véhicule par le biais d'un arc centré dans la direction d'un axe longitudinal de la carrosserie (2a) de véhicule ;
le mécanisme (6) de guidage de câble est agencé au niveau d'une seconde extrémité (5b) distale de l'élément (5) de bras pour recevoir et guider le câble (3) électrique utilisé vers la bobine (4) de câble,
dans lequel l'ensemble de guidage de câble comprend en outre un agencement (7) de verrouillage pour verrouiller de manière sélective l'élément (5) de bras au niveau d'une ou plusieurs positions le long de l'arc.

2. Système (1) selon la revendication 1, dans lequel l'élément (5) de bras est mobile librement à travers l'arc pendant le déplacement du véhicule (2).

3. Système (1) selon la revendication 1,
dans lequel l'agencement (7) de verrouillage pour verrouiller de manière sélective l'élément (5) de bras comprend une goupille (7a) de verrouillage et une plaque (7b) de verrouillage perforée correspondante.

4. Système (1) selon la revendication 3,
dans lequel la goupille (7a) de verrouillage est dotée d'une liaison (7a1) faible configurée pour, lorsque la goupille (7a) de verrouillage est utilisée pour verrouiller l'élément (5) de bras, se rompre lorsqu'elle est soumise à une force prédéterminée et pour libérer l'élément (5) de bras pour devenir librement mobile à travers l'arc.

5. Système (1) selon la revendication 1, dans lequel le mécanisme (6) de guidage de câble comprend une pluralité de rouleaux (6a) pour guider un câble (3) utilisé vers la bobine (4) de câble.

6. Système (1) selon la revendication 5,
dans lequel la pluralité de rouleaux (6a) est agencée pour guider un câble (3) utilisé tout en garantissant qu'un rayon de courbure de câble admissible pour un tel câble (3) utilisé soit maintenu pour toutes les positions de l'élément (5) de bras le long de l'arc.

7. Système (1) selon la revendication 1, dans lequel la longueur de l'élément (5) de bras, depuis sa fixation au niveau de l'arrière de la carrosserie (2a) de véhicule jusqu'au mécanisme (6) de guidage de câble au niveau de sa seconde extrémité (5b) distale, est telle qu'un câble (3) utilisé viendra se positionner à une distance prédéterminée de la carrosserie (2a) de véhicule, des chenilles ou roues (8) du véhicule (2), ou d'autres parties du véhicule (2).

8. Système (1) selon la revendication 1, dans lequel l'élément (5) de bras est relié à un agencement (9) d'actionneur pour être mobile de manière commandée à travers l'arc pendant le déplacement du véhicule (2).

9. Système (1) selon la revendication 8,
dans lequel l'agencement (9) d'actionneur comprend un ou plusieurs actionneurs (9) hydrauliques, pneumatiques ou électriques.
